(19) Europäisches Patentamt
European Patent Office
Office européen des brevets

(11) **EP 2 991 235 A1**

(12) **EUROPEAN PATENT APPLICATION**

(43) Date of publication:
02.03.2016 Bulletin 2016/09

(51) Int Cl.:
*H04B 3/54* (2006.01)     *H04B 17/00* (2015.01)
*H04L 29/08* (2006.01)     *G06F 11/30* (2006.01)

(21) Application number: 14306327.9

(22) Date of filing: 28.08.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• **Benslimen, Yosra**
35576 Cesson Sevigne Cedex (FR)

• **Straub, Gilles**
35576 Cesson Sevigne Cedex (FR)
• **Gayrard, Didier**
35576 Cesson Sevigne Cedex (FR)
• **Le Scouarnec, Nicolas**
35576 Cesson Sevigne Cedex (FR)

(74) Representative: Huchet, Anne
Technicolor
1-5 rue Jeanne d'Arc
92130 Issy-Les-Moulineaux (FR)

(54) **Method of monitoring and corresponding electronic device, computer readable program product and computer readable storage medium**

(57) The present disclosure relates to a method of monitoring of an energy behavior of a plurality of appliances including an appliance having a nominal cyclic energy consumption. According to an embodiment, the method comprises monitoring a energy consumption of said appliances comprising:
- providing a peak of a signal characteristic from said monitored energy consumption;
- linking said peak to a cluster of elements defined by a value of said given signal characteristic, said linking being performed according to a first criterion of proximity between said peak and a value of said given signal characteristic for an element of said cluster
- generating an alert according to a second criterion of proximity between said peak and a value of said given signal characteristic defined for an element of said linked cluster.

Figure 4

## Description

### 1. Technical field

The present disclosure relates to the field of monitoring of energy consumption (sometimes called ALM for "Appliance Load Monitoring"), notably to the monitoring of energy consumption in a non-intrusive way (sometimes called NILM for "Non-intrusive appliance load monitoring) and more specifically, to methods aiming at detecting anomalies related to the energy consumption of a plurality of appliances, to the power consumption of a plurality of electrical appliances, notably in a domestic environment.

### 2. Background art

Nowadays, the daily human activity is getting more and more related to energy consumption. In the European Union, the residential sector alone accounts for 30% of electricity usage. This is a growing concern as energy resources are limited and it is predicted that global energy demands will double by the end of 2030.

A house may comprise more than twenty electrical appliances: laptops, smart phones, washing machines, ovens, radiators ...

Forgetting to shut down one appliance, an electricity cut off, a door of a freezer being left opened... are probable cases that may threaten the users daily life and may make the energy bills more expensive. Therefore, with the increased usage of electricity, the interest for energy conservation has increased in order to save energy and costs. To achieve this, research efforts have led to the development of Appliance Load Monitoring (ALM) methods to perform detailed energy sensing and to provide information on the breakdown of the energy spent.

ALM can be divided in two major approaches namely Intrusive Load Monitoring (ILM) and Non-Intrusive Load Monitoring (NILM). In order to perform ALM, ILM techniques require at least one sensor per appliance, whereas NILM techniques require only a single meter per house. Thus, even if ILM methods are more accurate in measuring appliance-specific energy consumption, ILM techniques are more costly than NILM techniques. Furthermore, the multiple sensor configuration is fastidious and the complexity of the needed installation is very high, thus favouring the use of NILM techniques.

Prior art solutions related to NILM methods may be divided in two types: supervised and unsupervised methods.

The supervised ones are mainly optimization or pattern recognition based algorithms. A lot of supervised algorithms have been used to solve NILM problems. In order to recognize appliance operations from the aggregated signal, this type of learning is based on labeled data sets which requires setting up initial instrumentation, extra cost and human effort. Moreover, supervised learning may not be adapted for identifying new appliances that are not included in the training data set.

Lately, researchers are redirected to unsupervised or semi-supervised methods. The training data needs no a-priori information, so such a method permit to reduce the learning effort and offers a minimal setup cost.

The energy disaggregation between appliances is a mandatory step of the unsupervised or semi-supervised techniques of the prior art. The anomaly detection is tackled after identifying each appliance's signature. However, no set of appliance features as well as load disaggregation algorithms are found to be suitable for discerning all types of appliances. In particular, prior art techniques often failed to detect Kitchen appliances. Moreover, the task of energy disaggregation is laborious and therefore, the system is complex. Besides, identifying each appliance's signal is not accurate enough, which directly impacts the detection of abnormal behaviors. Another drawback of those solutions is that they require high sampling frequency: for instance, a real power may be saved every 1 second or less. So, there's a need to provide a solution that leads to a detection of deviations from normal operational behaviors being less complex to perform than prior art solutions.

### 3. Summary of the present disclosure.

The present disclosure enables at least one of the disadvantages of the prior art to be resolved by proposing a method of monitoring of an energy behavior of a plurality of appliances including at least an appliance, called cyclic appliance, having a nominal cyclic energy consumption.

More specifically, the invention relates to a method of monitoring of an energy behavior of a plurality of appliances including at least an appliance, called cyclic appliance, having a nominal cyclic energy consumption.

According to an embodiment of the present disclosure, said method comprises a monitoring of an energy consumption of said plurality of appliances, said monitoring comprising:

- providing, from said monitored energy consumption, at least a value associated to a peak and called peak value of at least a given signal characteristic;
- linking said provided peak value to at least a cluster of elements defined at least by a value of said given signal characteristic, said linking being performed according to a first criterion of proximity between said provided peak value and at least a value of said given signal characteristic for at least an element of said cluster;
- generating an alert according to a second criterion of proximity between said provided peak value of said given signal characteristic and a value of said given signal characteristic defined for at least an element of said at least one linked cluster.

In some embodiments, the element for which the value of said given signal characteristic is taken into account by said first criterion of proximity may be the same element for which the value of said given signal characteristic is taken into account by said second criterion of proximity. In other embodiments, the elements may be different.

One of the elements which value of said given signal characteristic is taken into account by said first and/or second criterion of proximity may notably be a centroid element of the considered cluster, for instance a geometric center of the cluster or a center of gravity of the cluster, taking into account the repartition of the elements of the cluster inside the cluster.

In some embodiments, the given signal characteristic may belong to a group comprising:

- Frequency;
- Phase;
- Amplitude.

It may notably be a discrete signal or a continuous one.

The value may represent aninstantaneous value or a mean value, a sum, a maxima or a minimum value of said signal characteristic over a certain interval.

According to an embodiment of the present disclosure, said linked cluster belongs to a reference set of clusters of elements defined at least by a value of said given signal characteristic.

For instance, the linked cluster may be chosen as being the cluster of the reference set having a centroid element with a peak of said given signal characteristic having the closest value to said provided peak of said given signal characteristic.

According to an embodiment of the present disclosure, said reference set is representative of an energy consumption of said plurality of appliances during at least a reference time interval.

The reference set may be obtained by using any clustering algorithm (for instance, using a K-means algorithm or a DBSCAN (for "Density-Based Spatial Clustering of Applications with Noise") algorithm, or any of their variations.

According to an embodiment of the present disclosure, said method comprises obtaining said reference set, said obtaining comprising:

- sampling the energy consumption of said plurality of appliances during at least a sliding window of said at least one reference time interval, said sampling resulting in reference energy samples;
- determining at least a reference value, associated to a peak, of said given signal characteristic from said reference energy samples;
- clustering elements defined at least by one of said determined reference values.

According to an embodiment of the present disclosure, said obtaining comprises defining dynamically said at least one reference time interval.

According to an embodiment of the present disclosure, said method comprises defining dynamically at least a relevant time interval of monitoring.

According to an embodiment of the present disclosure, said at least one reference time interval and/or said at least one relevant time interval of monitoring is defined as being a calmness time interval where the total energy consumption of said plurality of appliances stays under a given threshold.

According to an embodiment of the present disclosure, providing at least a peak value of said given signal characteristic comprises :

- sampling the monitored energy consumption of said plurality of appliances during at least a sliding window of said relevant time interval of monitoring, resulting in monitored energy samples;
- determining at least a peak value of said given signal characteristic from said monitored energy samples.

Notably, in some embodiments, the sliding window of said at least one time interval of monitoring may have the same size as the sliding window of said reference time interval.

According to an embodiment of the present disclosure, said determining is performed according to at least a mathematical transformation.

Said mathematical transformation may notably belong to a group comprising at least one of following transforms:

- a frequency transform; (like Fourier transform);
- a wavelet transform (like Haar transform);
- a mathematical metric based on the above transforms (like Welch method, and/or spectral density estimation, and/or energy density estimation);
- a combination of at least two of said foregoing transforms.

According to an embodiment of the present disclosure, said second criterion of proximity takes into account a maximal distance between an element of said linked cluster and said centroid element of said linked cluster.

According to an embodiment of the present disclosure, said method comprises a filtering of said reference set comprising, for at least a cluster of said reference set:

- calculating a relative size indicator of said cluster in said reference set and
- removing said cluster from said reference set when said relative size indicator is under a defined minimum threshold.

For instance, when a size of each cluster of said reference set is defined based on a maximal distance between an element of said cluster and the centroid element of said cluster, the relative size indicator to be assigned to a current cluster may be based on a comparing between the maximal distance of said current cluster with an average of the maximal distances of all the clusters of the reference set, or with a sum of the maximal distances of at least two clusters of the reference set.

According to an embodiment of the present disclosure, said alert generating comprises receiving a confirmation information when said alert is a true positive alert, and said obtaining takes into account said confirmation information.

In others words, the confirmation information may indicate an actual occurrence of at least an abnormal event.

For instance, in some embodiment, the reference set may be obtained by an incremental self-learning, an obtaining of a reference set being performed from time to time (for instance periodically), or after at least a monitoring where the second criterion of proximity was fulfilled for all provided peak values, and taking into account at least one confirmation information received since at least a previous obtaining of a reference set.

According to an embodiment of the present disclosure, said elements of said linked clusters are further defined according to an energy amplitude, said method comprises receiving a nominal energy amplitude of each cyclic appliance and said alert generating comprises computing at least a probability for a received energy amplitude of a cyclic appliance to be an energy amplitude of at least a linked cluster for which said criterion of proximity is not fulfilled..

According to another aspect, the present disclosure relates to an electronic device for monitoring of an energy behavior of a plurality of appliances including at least an appliance, called cyclic appliance, having a nominal cyclic energy consumption.

According to an embodiment of the present disclosure, said device comprises:

- an energy consumption acquiring module, configured to acquire an energyconsumption of said plurality of appliances (Such a module may be for instance a energy sensor or a reception module configured for receiving information from a energy sensor);
- a monitoring module, configured for monitoring a total energy consumption of said plurality of appliances, said monitoring module comprising:

  - a providing module, configured for providing, from said monitored energy consumption, at least a value associated to a peak and called peak value of at least a given signal characteristic;
  - a linking module, configured for linking said provided peak value to at least a cluster of elements defined at least by a value of said given signal characteristic, said linking being performed according to a first criterion of proximity between said provided peak value and a value of said given signal characteristic for at least an element of said cluster;

- an alert generation module, configured for generating an alert according to a second criterion of proximity between said provided peak value of said given signal characteristic and a value of said given signal characteristic defined for at least an element of said at least one linked cluster.

While not explicitly described, the electronic device of the present disclosure may be adapted to perform the method of monitoring of the present disclosure in any of its embodiments.

While not explicitly described, the present embodiments related to a method of monitoring of an energy consumption and/or to the corresponding electronic device may be employed in any combination or sub-combination. For example, some embodiments may involve obtaining of a reference set of clusters comprising defining dynamically a reference time interval as being a calmness time interval where the total energy consumption of said plurality of appliances stays under a given threshold and determining a peak according to a Fourier transform, and monitoring of an energy consumption comprising defining dynamically a relevant time interval of monitoring defined as being a similar calmness time interval and determining a peak according to a Fourier transform.

According to another aspect, the present disclosure relates to a non-transitory program storage device, readable by a computer. According to an embodiment of the present disclosure, said non-transitory computer readable program product tangibly embodies a program of instructions executable by a computer to perform the method described above, in any of its embodiments.

According to another aspect, the present disclosure relates to a computer readable storage medium carrying a software program comprising program code instructions for performing the method for monitoring of the present disclosure, in any of its embodiments, when said non transitory software program is executed by a computer.

As will be appreciated by one skilled in the art, aspects of the present principles can be embodied as a system, method, or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit", module" or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette: a hard disk, a read-only memory (ROM), an erasable programmable read-only memory (EPROM or Flash memory), a portable compact disc read-only memory (CD-ROM), an optical storage device; a magnetic storage device, or any suitable combination of the foregoing.

Thus, for example, it will be appreciated by those skilled in the art that the block diagrams presented herein represent conceptual views of illustrative system components and/o circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

4. List of figures.

The present disclosure will be better understood, and other specific features and advantages will emerge upon reading the following description, the description making reference to the annexed drawings wherein:

- Figure 1 shows an example of a power consumption of a cyclic appliance having a normal power behavior;
- Figure 2 shows an example of a power consumption of the cyclic appliance of figure 1 having an abnormal power behavior;
- Figure 3. is a fonctionnal diagram that illustrates a particular embodiment of the method of monitoring of an energy consumption of the present disclosure, where the monitored enregy is power;
- Figure 4 illustrates an electronic device adapted to perform at least a particular embodiment of the present disclosure.

It is to be noted that the drawings have only an illustration purpose and that the embodiments of the present disclosure are not limited to the illustrated embodiments.

5. Detailed description of the embodiments.

5.1 General principle

At least one embodiment of the present disclosure offers a new way of observing the energy behaviour of a plurality of appliances, for example a plurality of domestic appliances, with a house level granularity. This plurality of appliances includes at least a cyclic appliance (for instance a freezer, a fridge, an oven, an iron, a hair straighter, ...).

At least one embodiment of the present disclosure notably allows to generate alerts in suspicious cases where the energy behaviour of at least one of said cyclic appliances seems abnormal. Such abnormal energy behaviour may be due for instance, in case of a fridge or freeze, to an door staying opened, or to an electricity cut. It may be detected because of a deviation of at least a signal characteristic deduced from a monitored total energy consumption of the plurality of appliances, compared to reference values of this signal characteristic, for instance reference values representative of a energy consumption of the plurality of appliances when all appliances are in a "normal" state. Thus, at least some embodiments permits to detect an abnormal behaviour at a house level granularity, without having a knowledge of each appliance own energy consumption. As a consequence, such an embodiment does not require energy disaggregation of each appliance (which is very time consuming).

Such an abnormal behaviour may notably be detected in a calmness time interval, i.e. a time interval when the human activity in the house is minimal such as night periods, holidays or when nobody is present in the house during the day.

5.2 Detailed description of a particular embodiment

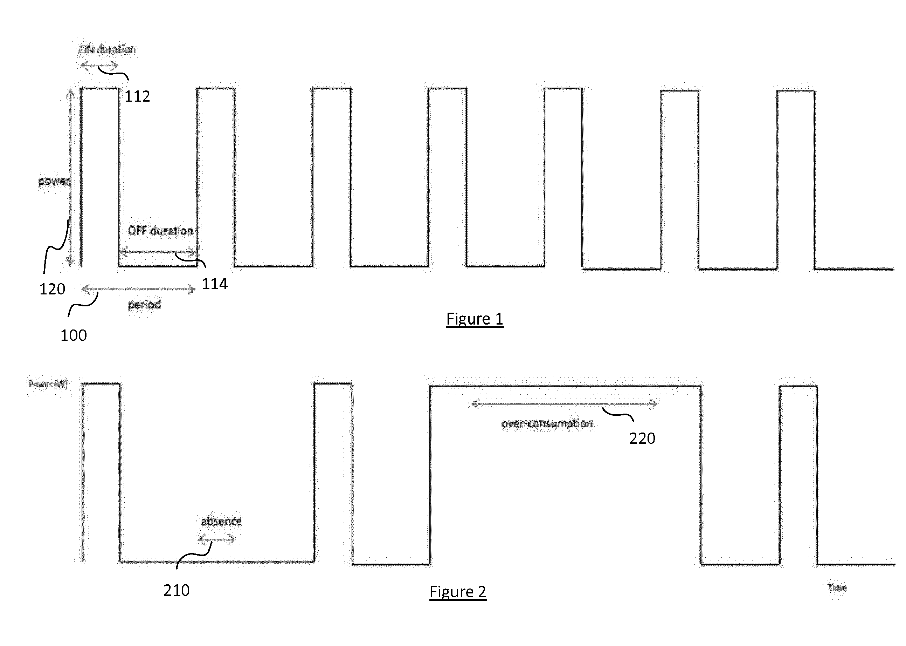

A detailed embodiment will now be presented in relation with figure 1 to 4. In the detailed embodiment, the monitored energy is power. Of course, other embodiments may monitor other kind of energy, like water for instance.

An energy behaviour of a cyclic appliance may be distinguished by its periodicity. Figures 1 and 2 illustrate the power consumption of a cyclic appliance. It may be defined with three parameters as shown in Figures 1 and 2:

- Its cycle (c) 100, or period, comprising a ON duration 112 and an OFF duration 114;

- Its electrical power (p) 120;
- Its cycle ratio (r), which may be defined by the formula :

$$r = \text{ON duration} / c$$

The ON and OFF actions are periodic in time and they respect a constant frequency.

As illustrated in figure 2, an anomaly may result for instance in an absence of power consumption 210 or an over-consumption 220:

The absence 210 is when the power consumption of an appliance becomes equal to zero for a certain time in ON durations instead of p

The over-consumption 220 is when the power consumption of an appliance becomes equal to p for a certain time in OFF durations instead of zero.

In both cases, a power variation will disappear in the time zone when the anomaly occurs.

The at least one signal characteristic which deviation is to be detected may depend upon embodiments. For instance, in some embodiments, it may be phase. In the presented embodiment, the signal characteristic is frequency and the peaks are peaks of a least a part of a power consumption of at least one appliance of said plurality of appliances. In case of absence or over-consumption, a power consumption peak for at least a frequency value will disappear.

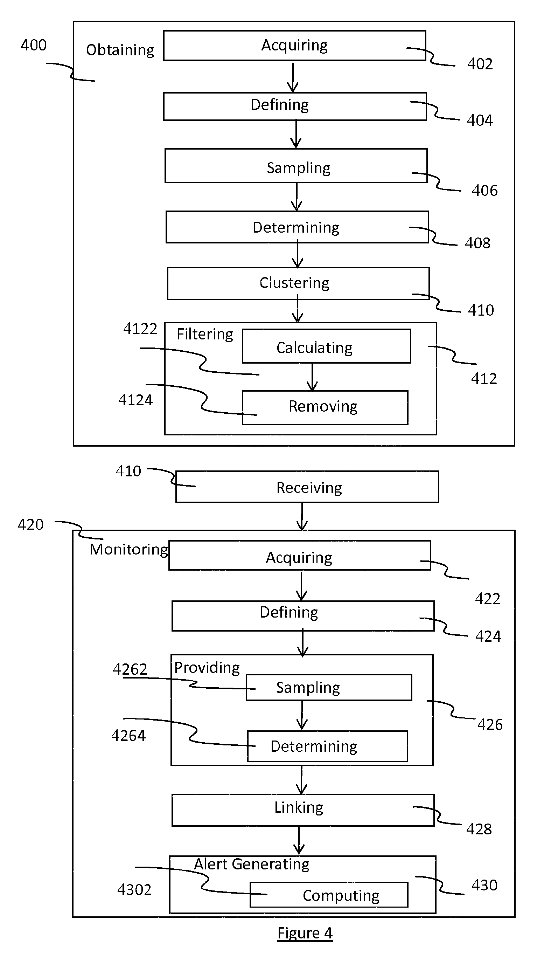

As illustrated in figure 4, in the particular embodiment described, the method comprises, prior to the monitoring 420 of a power consumption, obtaining 400 a reference set of frequency clusters. In some embodiments, obtaining 400 may be performed by acquiring (for instance from a database or from a history file) a reference set of clusters already constituted. It may also be performed by learning of the "normal" behaviour (for instance in terms of frequencies) of the different appliances in a house, as in the illustrated embodiment. Indeed, the behaviour of cyclic appliances may be different from one to another, even if they belong to the same family. It may depend for instance to different parameters such as brands of the cyclic appliances, their own temperature, the temperature of the room where they are located, the owner of each appliance's habits, the number of persons at one house, the age of each appliance... As a consequence, it is difficult to define a generic behaviour of a type of cyclic appliance. So, in order to detect an abnormal behaviour of a plurality of appliances including a cyclic appliance, it may be necessary to obtain the normal behaviour of the particular plurality of appliances in study. Such an obtaining may for instance be based on a learning, in an unsupervised way, of the total power consumption of the plurality of appliances, as illustrated in figure 4.

In the particular embodiment described, obtaining 400 of a reference set may comprise acquiring 402 the total power consumption of the plurality of appliances during a reference time interval. This acquiring 402 may be performed for instance by connecting a probe to a meter (like the power meter of the house where the plurality of appliances are installed).

Depending upon embodiments, the reference time interval may be assigned a predefined value (for example a value defined in a database or defined by a user), or may be defined dynamically.

In the illustrated embodiment of figure 4, obtaining 400 of a reference set comprises a definition 404 of a reference time interval by focusing on at least a time interval in which the appliances in the house are working 'healthfully' i.e. without any abnormal behaviour such as: electrical cut, doors of appliance being often opened or being left opened, over-population in the house...In some embodiments, the chosen reference time interval is a calmness time interval during which no user reacts with the plurality of appliances. Such an embodiment may help ensuring that the appliances are working normally during the obtaining of the reference set. For instance, a calmness time interval may be defined as a time interval where the power consumption of the plurality of appliances stay under a minimum threshold, called calmness threshold. Such a calmness time interval may be assessed during a night (for instance during a time interval from 10 pm to 6 am). The calmness threshold may have a predefined value or may be computed as being the minimal electrical power threshold that allows to detect the largest period in which a user's activity is the least.

In some embodiment, the calmness time interval may be assessed during several time intervals, (for instance during several nights), in order to ensure of more accurate definition of the reference time interval.

In the illustrated embodiment, the obtaining 400 also comprises a sampling 406 of the acquired power consumption during at least a sliding window (for instance of a duration of several hours) of the defined reference time interval.

In the particular illustrated embodiment, the obtaining 400 also comprises a determination 408 of at least a value of a signal characteristic associated to a peak of a least a part of a power consumption of at least one appliance of said plurality of appliances. This determination may comprises, notably, applying at least a mathematical transformation to the power samples of each sliding window. In the particular described embodiment, where the studied signal characteristic is frequency, the mathematic transformation used is a frequency transform, for instance a Fourier transform. Indeed, such a transform is well fitted to the behaviour of a cyclic appliance. Of course, depending upon embodiments, other transforms, like wavelet or phase transforms, or a combination thereof, may be used. For instance, in embodiments in which the studied signal characteristic is phase, a Welch transformation may be used. In other embodiment in which the studied signal characteristic is wavelet, a Haar transform may be used.

In the embodiment of figure 4, with a studied signal characteristic being frequency and the mathematic transformation used being a Fourier transform, the peaks are representative of at least a part of the energy consumption of at least some cyclic appliances of said plurality of appliances (for instance some fundamentals and/or some harmonics and/or a sum of at least a fundamental and/or at least a harmonic).

In the illustrated embodiment, the determination also comprises an extraction of at least a reference frequency value, amongst the frequency values associated to a peak obtained by the Fourier transform (for instance the frequencies associated to the N-highest peaks of a Fourier transform, where N is a number equal or greater to the number of appliances of the plurality of appliances) and a storage of those extracted frequencies.

In the particular embodiment described, the obtaining 400 also comprises a clustering 410 of the determined reference frequency values, by applying a clustering algorithm (for instance k-means or any unsupervised clustering algorithm) on the reference frequencies, in order to obtain a reference set of several clusters. In this reference set, a cyclic appliance from the plurality of appliances may be represented by at least a cluster.

In some embodiment, the method may also comprise filtering 412 of the reference set, in order to remove at least an inconsistent or outlier cluster, for instance a low populated cluster or a very small cluster. Such a filtering may be performed before the monitoring 420 of the power consumption and, for instance, as illustrated in figure 4, after the clustering 410 of the obtaining 400. The filtering 412 may comprise a calculating 4122 of a relative size indicator of at least one cluster of the reference set. In some embodiment, such a relative size indicator may be calculated for instance by a percentage between a maximal distance from the population of a particular cluster to its centroid and a maximal distance between the population of at least another cluster of the reference set and its centroid. In another embodiment, such a relative size indicator may be calculated for instance by a percentage between the number of elements that belong to a cluster and the number of elements of the whole reference set of clusters. It may also be calculated by a formula taking account of both above percentages.

If the calculated relative size indicator is under a certain percentage (for instance 5%, 10% or 15%), the obtaining may comprise a removal 4124 of the cluster from the reference set.

Once a reference set of clusters has been obtained, the illustrated embodiment comprises a monitoring 420 of a power consumption of the plurality of appliances. Such a monitoring 420 may notably permit to detect an abnormal power consumption that results in a deviation of the given signal characteristic from the obtained reference set.

As illustrated in figure 4, the monitoring 420 may comprises an acquiring 422 of the total consumption of the plurality of appliances. The time interval of the acquiring may depend upon embodiments. In some embodiments, this acquiring may be performed in real time, continuously or on request of a user, or during a particular time interval. This monitored time interval may have an arbitrary value. In the embodiment of figure 4, the monitoring 420 comprises a dynamic definition 424 of at least a time interval of monitoring. This time interval of monitoring is based on at least a calmness time interval defined during the obtaining of the reference set. For instance, the monitored time interval may be chosen as being the same time interval as the reference time interval (for instance, if the reference time interval is a time interval between 10 pm and 6 am, the time interval of monitoring may be chosen as the time interval between 10 pm and 6 am each day) or as being a time interval included in a calmness time interval (for instance, if the reference time interval is a time interval between 10 pm and 6 am, the time interval of monitoring may be chosen as the time interval between 11 pm and 4 am each day).

In the illustrated embodiment, the monitoring 420 also comprises a providing 426 of at least a frequency value associated to a peak (called peak frequency value) from the power consumption acquired during the defined monitored time interval. In the illustrated embodiment, the providing 426 comprises a sampling 4262 of the acquired power consumption and a determination 4264 of frequency value associated to a peak, similar to the sampling 406 and determination 408 performed during the obtaining 400 of an reference set and already described above. In particular, the same number of peak frequency values may be determined during the obtaining 400 of a reference set and during the monitoring 420 of a power consumption. In other embodiments, a different number of peaks may be determined during the obtaining 400 of a reference set and during the monitoring 420 of a power consumption.

As illustrated in figure 4, the monitoring 420 of a power consumption also comprises a linking 428 of each determined peak frequency value to at least one cluster of the reference set. This linking 428 may notably be performed according to a criterion of proximity between a determined peak frequency value and at least a reference value of at least an element (for instance a centroid or an element being the furthest to a centroid) of at least a cluster of the reference set. For instance, the clustering algorithm may be the one used during the clustering 410 of the obtaining 400. In the illustrated embodiment, a determined peak frequency value is linked to the cluster which centroid element is defined with a frequency value having the closest value to the determined peak frequency value.

The monitoring 420 also comprises an alert generation 430. More precisely, in the embodiment of figure 4, each linked peak frequency value is evaluated, in order to detect an abnormal deviation from the reference set.

Indeed, in case of an abnormal power consumption, some fundamentals and/or harmonics peaks may vary. For example, a fundamental peak related to at least a particular cyclic appliance and its harmonics may disappear or get lower. Thus, considering the aggregated power consumption of the plurality of appliances, the set of N frequency values associated to the N greatest peaks may be different in an normal behaviour and in an abnormal behaviour. For instance, a frequency related to at least a fundamental or an harmonic peak of a cyclic appliance, that is one of N frequency values of the reference set, may be absent of the N linked frequencies.

The evaluation of a linked peak frequency value may be based on a criterion of proximity between a linked peak frequency value and a reference frequency value of at least an element of the cluster with which the linked peak frequency value is linked (this cluster is called hereinafter "linked cluster" for clarity purpose). This element may notably be the centroid of the linked cluster. For instance, the distance between the linked peak frequency value and the reference frequency value of the centroid of the linked cluster may be compared to the maximal distance between a peak frequency value of an element of the linked cluster and the frequency value of the centroid of the linked cluster.

In the particular embodiment described, an alarm is generated when this evaluated distance is greater than the maximal distance between a peak frequency value of an element of the linked cluster and the centroid of the linked cluster. In other embodiments, an alarm may be generated when the ratio between the evaluated distance and the maximal distance inside the cluster is greater than a certain threshold (for instance 5%, 10 % or 15%).

In some particular embodiments, a test (that may be similar to the calculating 412) relating to the relevance of a linked cluster may be performed prior to the evaluation of a distance. Such an embodiment may permit to avoid to take into account a frequency that cannot be linked to a relevant cluster.

The generation 430 of an alert may depend upon embodiments: in some embodiments, a sound alarm may be generated. In some other embodiments (eventually complementary) a written message (like a SMS, or an email) may be sent to a person in charge of the supervising of at least some of the appliances (like a person living in the house where the appliances are installed), and/or a printed alert may be generated on a printer, and/or a luminous alert, like an animation of at least one led (or Light-Emitting Diode) may be generated on a device in charge of the supervising of at least some of the appliances.

In some embodiments, compatible with the embodiment illustrated by figure 4, the elements of a linked cluster may consist of given values of a unique signal characteristic (like frequency) and the criterion of proximity assessed during the monitoring 420 may be based only on this unique signal characteristic.

In other embodiments, also compatible with the embodiment illustrated by figure 4, the elements of a linked cluster may comprise several signal characteristics. For instance each element may comprise an abscissa value and an ordinate value of a peak resulting from the mathematic transform used during the determining 408 performed during the obtaining 400. For instance, each element of a linked cluster may comprise a frequency value and a power amplitude value in case of a Fourier transform.

In such an embodiment, the clustering algorithm of the obtaining 400, or at least one of the criterion of proximity used during the monitoring 420 may notably involve a calculation of a distance of several dimensions. For instance a distance in two dimensions (like abscissa and ordinate), like an Euclidean distance, may be used for elements of a linked cluster comprising an abscissa and an ordinate value. Other distance metrics (like Hamming) may also be used.

In at least a particular embodiment, the method also comprises a reception 410 (for example thanks to a user input) of a nominal power consumption of each cyclic appliance. Such a reception may notably be performed before the monitoring 420.

According to at least an embodiment, a linked cluster is composed of elements comprising at least an amplitude value and the method further comprises an association of the centroid element of a linked cluster to a set of possible combinations, regarding that cluster, of the received nominal power consumptions. This association may be based on the amplitude value of the centroid of the linked cluster.

For instance, if the received power amplitude values are $a_1$, $a_2$, and $a_3$, the total set of possible power amplitude combinations are {0, $a_1$, $a_2$, $a_3$, $a_1+a_2$, $a_1+a_3$, $a_2+a_3$, $a_1+a_2+a_3$}. For a cluster $C_L$ having a centroid with an amplitude value $a_c$, the possible combinations are only the ones resulting in a total power consumption of $a_c$ (for instance, in the example cited above, only the combinations $a_1+a_3$ and $a_2+a_3$" if $a_1+a_3 = a_c$ and $a_2+a_3 = a_c$).

During the monitoring 420, generating an alert 430 may comprise computing 4302 at least a probability for a received power amplitude of a cyclic appliance to be a power amplitude of a cyclic appliance in default. This evaluating 4302 may involve assessing the power consumption belongings to possible combinations of power consumption associated to a linked cluster for which at least said second criterion of proximity is not fulfilled. The alert may notably be emitted only when one of said at least one probabilities becomes higher than a certain threshold.

Alert generating may comprise restituting of at least a nominal power consumption and/or at least an identifier of a cyclic appliance. The restituting may also include the restitution of a probability for this at least one nominal power consumption and/or cyclic appliance identifier to correspond to a cyclic appliance in default.

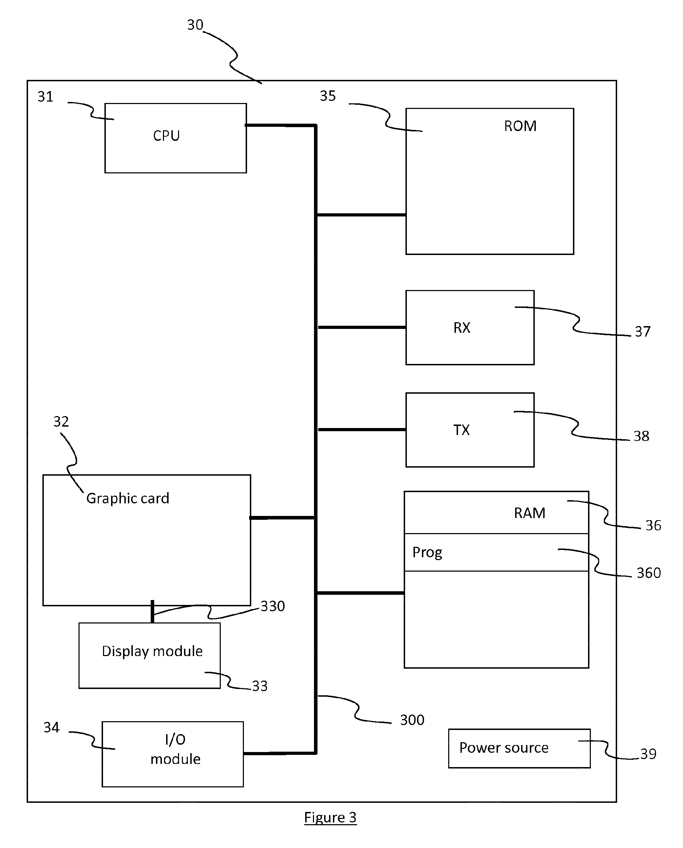

An electronic device adapted to implement at least one embodiment of the method of monitoring is now described, in link with figure 3. Depending upon embodiments, such an electronic device may be integrated in another device (for instance a meter of a house) or be a standalone device, for instance a terminal, equipped with means for obtaining the energy consumption of a plurality of appliances. Such means for obtaining the energy consumption may include acquiring means, like a probe for acquiring the power consumption evaluated by a meter, or reading or receiving means from obtaining an already constituted reference set of clusters.

The electronic device may for instance be a personal computer, a laptop, a tablet, a smartphone or a set top box.

In the particular embodiment of figure 3, the electronic device 30 comprises following modules, link together via a data and address bus 300, which may also carry a timer signal:

- a micro-processor 31 (or CPU) ;
- a graphic card 32 (such a card may be optional when no alert is to be indicated on the device itself);
- at least an Input/ Output module 34, (like a keyboard, a mouse, a webcam, a probe, a microphone, a loud-speaker, a probe for acquiring a power consumption from a meter, and so on);
- a ROM (or « Read Only Memory ») 35 ;
- a RAM (or« Random Access Memory ») 36 ;
- a communication interface RX 37 configured for the reception of data, for example via a wireless connection (notably of type WIFI® or Bluetooth);
- a communication interface 38 configured for the transmitting of data, for example via a wireless connection (notably of type WIFI® or Bluetooth);
- a power source 39.

In some embodiments, the electronic device 30 may also comprises, or be connected to, a display module 33, for instance a display screen, directly connected to the graphic card 32 by a dedicated bus 330. In a variant, the display module may be external to the electronic device 30. In some embodiments, the electronic device 30 may communicate with the display module 33 thanks to wireless means. In other embodiments, the electronic device 30 may communicate with the display module thanks to wired means, like a cable transmitting display signals. The electronic device 30 may comprise a connector (not illustrated) or other means for transmitting adapted to transmit a display signal to an external display apparatus like an LCD or plasma screen or a video projector.

Each of the mentioned memories may comprise at least a register, that is to say a memory zone of low capacity (a few binary data) or high capacity (with a capability of storage of a whole program or of all or part of data representative of data to be calculated or displayed).

When the electronic device is powered on, the microprocessor 31 loads and executes the program instructions contained in a register of the RAM 36, and notably the algorithms needed of performing at least one embodiment of the method of monitoring described herein.

According to a variant, the electronic device 30 comprises several microprocessors.

According to another variant, the power source 39 is external to the electronic device 30.

In the particular embodiment illustrated in figure 3, the microprocessor 31 may notably be configured for the monitoring of an energy behavior of a plurality of appliances including at least an appliance, called cyclic appliance, having a nominal cyclic energy consumption.

In this illustrated embodiment, the microprocessor is configured for monitoring an energy consumption of said plurality of appliances.

Such a monitoring may notably be performed thanks to a monitoring module comprising:

- a providing module, configured for providing, from said monitored energy consumption, at least a value associated to a peak and called peak value of at least a given signal characteristic;
- a linking module, configured for linking said provided peak value to at least a cluster of elements defined at least by a value of said given signal characteristic, said linking being performed according to a first criterion of proximity between said provided peak value and a value of said given signal characteristic for at least an element of said cluster;
- an alert generation module, configured for generating an alert according to a second criterion of proximity between said provided peak value of said given signal characteristic and a value of said given signal characteristic defined for at least an element of said at least one linked cluster.

**Claims**

1. A method of monitoring of an energy behavior of a plurality of appliances including at least an appliance, called cyclic appliance, having a nominal cyclic energy consumption, said method being **characterized in that** it comprises a monitoring of an energy consumption of said plurality of appliances, said monitoring comprising:

   - Providing, from said monitored energy consumption, at least a value associated to a peak and called peak value of at least a given signal characteristic;
   - linking said provided peak value to at least a cluster of elements defined at least by a value of said given signal characteristic, said linking being performed according to a first criterion of proximity between said provided peak value and a least a value of said given signal characteristic for at least an element of said cluster;
   - generating an alert according to a second criterion of proximity between said provided peak value of said given signal characteristic and a value of said given signal characteristic defined for at least an element of said at least one linked cluster.

2. The method of monitoring according to claim 1 wherein said linked cluster belongs to a reference set of clusters of elements defined at least by a value of said given signal characteristic.

3. The method of monitoring according to claim 2 wherein said reference set is representative of an energy consumption of said plurality of appliances during at least a reference time interval.

4. The method of monitoring according to any of claims 2 to 3 wherein said method comprises obtaining said the reference set, said obtaining comprising:

   - sampling the energy consumption of said plurality of appliances during at least a sliding window of said at least one reference time interval, said sampling resulting in reference energy samples;
   - determining at least a reference value associated to a peak of said given signal characteristic from said reference energy samples;
   - clustering elements defined at least by one of said determined reference values.

5. The method of monitoring according to any of claims 3 to 4 wherein said obtaining comprises defining dynamically said at least one reference time interval.

6. The method of monitoring according to claims 1 to 5 **characterized in that** it comprises defining dynamically at least a relevant time interval of monitoring.

7. The method of monitoring according to any of claims 5 to 6 wherein said at least one reference time interval and/or said at least one relevant time interval of monitoring is defined as being a calmness time interval where the total energy consumption of said plurality of appliances stays under a given threshold.

8. The method of monitoring according to any of claims 6 to 7 wherein providing at least a peak value of said given signal characteristic comprises :

   - sampling the monitored energy consumption of said plurality of appliances during at least a sliding window of said relevant time interval of monitoring, resulting in monitored energy samples;
   - determining at least a peak value of said given signal characteristic from said monitored energy samples.

9. The method of monitoring according to claim 4 or 8 wherein said determining is performed according to at least a mathematical transformation.

10. The method of monitoring according to any of claims 1 to 9 wherein said second criterion of proximity takes into account a maximal distance between an element of said linked cluster and said centroid element of said linked cluster.

11. The method of monitoring according to any of claims 2 to 10 wherein said method comprises a filtering of said reference set comprising, for at least a cluster of said reference set:

   - calculating a relative size indicator of said cluster in said reference set and ;
   - removing said cluster from said reference set when said relative size indicator is under a defined minimum threshold.

12. The method of monitoring according to any of claims 1 to 11 wherein said elements of said linked clusters are further defined according to an energy amplitude, said method comprises receiving a nominal energy amplitude of each cyclic appliance and said alert generating comprises computing at least a probability for a received energy amplitude of a cyclic appliance to be an energy amplitude of at least a linked cluster for which said criterion of proximity is not fulfilled.

13. Electronic device for monitoring of an energy behavior of a plurality of appliances including at least an appliance, called cyclic appliance, having a nominal cyclic energy consumption, said device being **characterized in that** it comprises:

   - an energy consumption acquiring module, configured to acquire an energy consumption of said plurality of appliances;
   - a monitoring module, configured for monitoring a total energy consumption of said plurality of appliances, said monitoring module comprising:

     • a providing module, configured for providing, from said monitored energy consumption, at least a value associated to a peak and called peak value of at least a given signal characteristic;
     • a linking module, configured for linking said provided peak value to at least a cluster of elements defined at least by a value of said given signal characteristic, said linking being performed according to a first criterion of proximity between said provided peak value and a value of said given signal characteristic for at least an element of said cluster;

• an alert generation module, configured for generating an alert according to a second criterion of proximity between said provided peak value of said given signal characteristic and a value of said given signal characteristic defined for at least an element of said at least one linked cluster.

14. A non-transitory computer readable program product, characterized is that it comprises program code instructions for performing the method for monitoring according to any of claims 1 to 12, when said non transitory software program is executed by a computer.

15. Computer readable storage medium carrying a software program comprising program code instructions for performing the method for monitoring according to any of claims 1 to 12, when said non transitory software program is executed by a computer.

Figure 1

Figure 2

Figure 3

400

**Obtaining**

| Acquiring |  402

↓

| Defining |  404

↓

| Sampling |  406

↓

| Determining |  408

↓

| Clustering |  410

↓

**Filtering**  4122

| Calculating |  412

↓

4124 | Removing |

410 | Receiving |

↓

420

**Monitoring**

| Acquiring |  422

↓

| Defining |  424

↓

**Providing**

4262 | Sampling |

↓  426

4264 | Determining |

↓

| Linking |  428

↓

**Alert Generating**

4302 | Computing |  430

Figure 4

Europäisches
Patentamt

European
Patent Office

Office européen
des brevets

# EUROPEAN SEARCH REPORT

Application Number

EP 14 30 6327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/251807 A1 (RADA PATRICK A [US] ET AL) 13 October 2011 (2011-10-13) * paragraphs [0063] - [0230] * | 1-15 | INV. H04B3/54 H04B17/00 H04L29/08 G06F11/30 |
| X | WO 2014/090969 A2 (UNIV DUBLIN [IE]) 19 June 2014 (2014-06-19) * pages 4-34 * | 1-15 | |
| X | US 2012/101653 A1 (TRAN BAO [US]) 26 April 2012 (2012-04-26) * paragraphs [0024] - [0126] * | 1-15 | |
| A | WO 2012/156757 A1 (ONZO LTD [GB]; SANCHEZ LOUREDA JOSE MANUEL [GB]) 22 November 2012 (2012-11-22) * paragraphs [0061] - [0263] * | 1-15 | |
| A | WO 2013/106923 A1 (ENERGY AWARE TECHNOLOGY INC [CA]) 25 July 2013 (2013-07-25) * paragraphs [0015] - [0248] * | 1-15 | |
| A | DE 10 2012 108536 A1 (DEUTSCHE TELEKOM AG [DE]; UNIV BERLIN TECH [DE]) 13 March 2014 (2014-03-13) * paragraphs [0008] - [0031] * | 1-15 | TECHNICAL FIELDS SEARCHED (IPC) H04B H04L G06F |

The present search report has been drawn up for all claims

| Place of search | Date of completion of the search | Examiner |
|---|---|---|
| Munich | 2 February 2015 | Kurze, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6327

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2015

| Patent document cited in search report | Publication date | Patent family member(s) | Publication date |
|---|---|---|---|
| US 2011251807 A1 | 13-10-2011 | NONE | |
| WO 2014090969 A2 | 19-06-2014 | NONE | |
| US 2012101653 A1 | 26-04-2012 | NONE | |
| WO 2012156757 A1 | 22-11-2012 | DE 112012002101 T5<br>GB 2493901 A<br>US 2014129291 A1<br>WO 2012156757 A1 | 13-02-2014<br>27-02-2013<br>08-05-2014<br>22-11-2012 |
| WO 2013106923 A1 | 25-07-2013 | AU 2013210745 A1<br>CA 2864758 A1<br>EP 2805172 A1<br>US 2015012147 A1<br>WO 2013106923 A1 | 21-08-2014<br>25-08-2013<br>26-11-2014<br>08-01-2015<br>25-07-2013 |
| DE 102012108536 A1 | 13-03-2014 | NONE | |

EPO FORM P0459

For more details about this annex : see Official Journal of the European Patent Office, No. 12/82